# EUROPEAN PATENT APPLICATION

(11) **EP 2 246 126 A1**
(43) Date of publication of application: **03.11.2010**
(21) Application number: 09703239.5
(22) Date of filing: 19.01.2009
(51) Int. Cl.: B05D 7/14, B05D 7/24, B32B 15/08, C23C 22/07

(54) **COATED STEEL WHICH HAS EXCELLENT BENDING PROPERTIES**

(30) Priority: 24.01.2008 JP 2008013462
(71) Applicant: Nippon Light Metal Company, Ltd., Tokyo 140-8628 (JP)
(72) Inventor: TAKASAWA, Reiko, Shizuoka-shi Shizuoka 421-3291 (JP)
(74) Representative: Vossius & Partner
(86) International application number: PCT/JP2009/050673
(87) International publication number: WO 2009/093546

(57) **Abstract**

Provided is a coated steel material which has a film of coating on the surface of a steel material, is non-chromium and eco-friendly, and shows not only excellent corrosion resistance but also excellent workability by bending. The coated steel material is **characterized by** having a film of coating formed on an inorganic film which contains a silicon compound in an amount in the range of 5-100 mg/m² as silicon and an organic binder in an amount in the range below 30 wt% and is substantially free of chromium. Although the coated steel material contains substantially no hexavalent and trivalent chromium or it is what is called "non-chromium," it shows excellent workability by bending as well as excellent corrosion resistance and, as it is an eco-friendly material, it can be used without anxiety in a wide variety of applications.

## Description

### Field of Technology

This invention relates to a coated steel material of excellent workability by bending which has a film of coating excellent not only in corrosion resistance but also in workability by bending on the surface of a variety of steel materials such as cold-rolled steel, hot-rolled steel, stainless steel, zinc plated steel, zinc-aluminum alloy plated steel, zinc-iron alloy plated steel, zinc-magnesium alloy plated steel, and aluminum plated steel.

### Background Technology

The use of chromium-based surface treating agents in the processes for treating steel materials for corrosion protection such as the chromate treatment and the chromate-phosphate process is well known and these processes are still used widely today. However, there is the possibility that the use of such chromium-based surface treating agents will be restricted in the future because of the toxicity of chromium. A tendency toward regulating the use of environmental load substances is growing throughout the world at present; for instance, EU issued a directive on the disposal of waste automobiles to start legally regulating the use of hexavalent chromium. This tendency has created a demand for coated steel materials that are processed by a chromium-free treatment or by what is called non-chromium treatment and yet show excellent corrosion resistance.

As an example of non-chromium coating of a steel material, formation of a film containing 50-90 mass% of a specified crosslinked resin matrix (A) and 10-50 mass% of an inorganic rust preventive (B) such as colloidal silica, phosphoric acid, and niobium oxide sol on the surface of a metal plate such as a zinc plated steel plate is proposed as a means to provide an organically coated metal plate which is non-chromium and shows excellent corrosion resistance, alkali resistance, solvent resistance, scratch resistance, and adhesive properties (refer to patent document 1).

Other proposals such as the following are made: a zirconium- or titanium-based chemical treatment is proposed as a non-chromium chemical treatment good for all metals (patent document 2); application of an undercoat containing a sulfur compound and polyurethane is proposed as a non-chromium treatment in coating of zinc plated steel plates and aluminum materials (patent document 3); and formation of a film containing a silane coupling agent, a urethane resin, and a zirconium compound as a non-chromium treatment for a metal material is proposed as a means to provide a surface-treating film of excellent corrosion resistance and adhesive properties (patent document 4).
Patent document 1: JP 2005-281,863 A
Patent document 2: JP 2004-218,070 A
Patent document 3: JP 2006-124,752 A
Patent document 4: JP 2006-328,445 A

### Disclosure of the Invention

### Problems to be Solved by the Invention

The inventors of this invention have conducted further studies on coated steel materials on which the aforementioned kind of non-chromium, eco-friendly, and excellently corrosion-resistant film of coating is formed, found surprisingly that interposition of a film (inorganic film) containing a specified silicon oxide in a specified amount as silicon and an organic binder in an amount of 30 wt% or less between the surface of the steel material and the film of coating can improve not only the anticorrosion performance but also the workability by bending of the coated steel material to be obtained, and completed this invention.

Accordingly, an object of this invention is to provide a coated steel material which has a film of coating on the surface, is non-chromium and eco-friendly, and shows excellent corrosion resistance and workability by bending.

### Means to Solve the Problems

Thus, this invention relates to a coated steel material wherein a film of coating on the surface of a steel material is formed on an inorganic film which contains a silicon compound as silicon in an amount in the range of 5-100 mg/m² and an organic binder in an amount in the range below 30 wt% and is substantially free of chromium. The wording "substantially free of chromium" here means that chromium exists in the inorganic film below the detection limit (0.5 mg/m²) in X-ray fluorescence analysis or chromium is not added deliberately.

In this invention, the steel materials include cold-rolled steel, hot-rolled steel, stainless steel, zinc plated steel, zinc-aluminum alloy plated steel, zinc-iron alloy plated steel, zinc-magnesium alloy plated steel, and aluminum plated steel, materials fabricated from the preceding steel materials, and materials obtained by combination of the preceding fabricated materials. The aforementioned zinc plated steel material is exemplified by zinc electroplated steel and zinc hot-dip plated steel and the zinc-aluminum alloy plated steel material is exemplified by zinc-5% aluminum alloy hot-dip plated steel plate and 55% aluminum-zinc alloy hot-dip plated steel.

According to this invention, the inorganic film to be formed on the surface of the steel material needs to contain silicon oxide in an amount in the range of 5 mg/m² to 100 mg/m², preferably in the range of 10 mg/m² to 80 mg/m², as silicon. When the amount of silicon in the inorganic film falls below 5 mg/m², there occurs a problem of deterioration of corrosion resistance. On the other hand, when the amount exceeds 100 mg/m², there occurs a problem of poor adhesive properties.

The thickness of this inorganic film is normally in the range of 5 nm to 500 nm, preferably in the range of 20 nm to 300 nm, and the content of silicon in the inorganic film is in the range of 30 wt% to 45 wt%, preferably in the range of 32 wt% to 42 wt%. When the thickness is below 5 nm, the corrosion resistance may become insufficient. On the other hand, when the thickness exceeds 500 nm, the adhesive properties may become insufficient. When the content of silicon in the inorganic film is less than 30 wt%, insufficient corrosion resistance becomes a problem. When the content of silicon exceeds 45 wt%, insufficient workability by bending becomes a problem.

Further, this inorganic film is preferably a film formed from water-dispersible silica; examples of water-dispersible silica include colloidal silica and vapor phase silica and colloidal silica is preferred. There is no specific restriction on colloidal silica. Concretely, examples of spherical colloidal silica include Snowtex-C, Snowtex-O, Snowtex-N, Snowtex-S, Snowtex-OL, Snowtex-XS, and Snowtex-XL manufactured by Nissan Chemical Industries, Ltd; examples of chain-like colloidal silica include Snowtex-UP and Snowtex-OUP manufactured by Nissan Chemical Industries, Ltd.; and examples of vapor phase silica include Aerosil 130, Aerosil 200, Aerosil 200CF, Aerosil 300, Aerosil 300CF, Aerosil 380, and Aerosil MOX80 manufactured by Nippon Aerosil Co., Ltd.

In order to improve the flex resistance of the inorganic film of this invention to a degree that is required for working of steel by bending, it is necessary for the inorganic film to contain an organic binder in an amount normally in the range below 30 wt%, preferably in the range of 2 wt% to 25 wt%, in addition to the aforementioned silicon oxide. When the content of this organic binder exceeds 30 wt%, the corrosion resistance may deteriorate. When the content falls below 2 wt%, the effect of improving the flex resistance may be lost in some cases.

The organic binder to be used for the aforementioned purpose is preferably composed of a water-based resin and/or a crosslinking agent and it is not specifically limited. Examples of the water-based resins include water-based acrylic resins, water-based polyester resins, water-based polyurethane resins, water-based epoxy resins, and water-soluble resins such as polyacrylic acid and polyvinyl alcohol. The crosslinking agents are those which crosslink the aforementioned water-based resins and examples include amino resins, polyisocyanate compounds, blocked polyisocyanate compounds, epoxy compounds, polyhydric alcohols, silane compounds, and zirconia-based crosslinking agents.

Moreover, for the purpose of improving the corrosion resistance still further, if necessary, a specified phosphorus compound may be added to the solution for film-forming treatment in addition to the aforementioned silicon oxide during the film-forming treatment thereby adding the phosphorus compound to the inorganic film. The phosphorus compound thus added at times reacts with zinc and aluminum present on the surface of the plated steel material to form a phosphate such as zinc phosphate and aluminum phosphate and such a phosphate becomes contained in the film. The amount of the phosphorus compound to be added to the inorganic film for this purpose is controlled in the range of 1 mg/m² to 15 mg/m², preferably in the range of 1.5 mg/m² to 10 mg/m², as phosphorus and the content of phosphorus in the film is controlled in the range below 10 wt%. When the phosphorus compound is added in an amount of less than 1 mg/m² as phosphorus, the purpose of adding the phosphorus compound may not be attained. When the content of phosphorus in the film exceeds 10 wt%, the adhesive properties may deteriorate.

The phosphorus compounds to be added for this purpose during the film-forming treatment are not specifically limited and include one kind or two kinds or more selected from orthophosphoric acid, phosphonic acid, pyrophosphoric acid, and tripolyphosphoric acid and salts thereof. Specific examples include phosphoric acid, triammonium phosphate, trisodium phosphate, aluminum phosphate, zinc phosphate, and magnesium phosphate.

Furthermore, for the purpose of improving the corrosion resistance still further, an inorganic compound may be added to the inorganic film in addition to the aforementioned silicon oxide, similarly to the addition of the aforementioned phosphorus compound. The inorganic compound mentioned here is an inorganic compound other than the aforementioned silicon oxide and phosphorus compound and it is preferably added to the film in an amount below 35 wt%. When the addition of the inorganic compound exceeds 35 wt%, the corrosion resistance deteriorates. Examples of the inorganic compounds to be added during the film-forming treatment include metal oxide sols such as alumina sols, zirconia sols, and titania sols and inorganic pigments such as zinc oxide, titanium oxide, barium sulfate, alumina, kaolin, and iron oxide.

According to this invention, the film of coating to be formed on the inorganic film is not specifically limited and the paints to be used in the formation of this film of coating include acrylic paints, polyester paints, urethane paints, acrylic urethane paints, acrylic polyester paints, epoxy paints, fluoropolymer-based paints, acrylic silicone paints, urethane silicone paints, acrylic urethane silicone paints, alkali silicate-based paints, silica sol-based paints using colloidal silica, titanium oxide-based paints, ceramic paints, and silicone-containing paints. They may be organic paints, inorganic paints, or organic-inorganic hybrid paints.

The film of coating to be formed on the inorganic film may be formed by application of a silicon-containing paint and it may be a silicon-containing film. The silicon-containing paints to be used in the formation of this silicon-containing film are not specifically limited and they are paints that contain monomers or polymers having a siloxane bond or paints that contain alkoxysilanes and/or silanol groups. Examples of the paints of this kind include silicone paints, acrylic silicone paints, urethane silicone paints, acrylic urethane silicone paints, alkali silicate-base paints, silica sol-based paints, silica-based paints, and ceramic paints. The paints are available as solvent-based paints, aqueous emulsion-based paints, or water-based paints and aqueous emulsion-based paints are particularly preferred.

According to this invention, the film of coating to be formed on the inorganic film may be a film of topcoat which makes up the outermost surface of the coated steel material or it may be a film which has a function of serving as a layer of primer on which a film of topcoat is formed. Although the thickness of the film of coating to be formed on the inorganic film is selected to suit a specific application of the coated steel material, the thickness of the layer to function as a primer is controlled normally in the range of 0.1µm to 20µm, preferably in the range of 0.5µm to 15µm. When the thickness is less than 0.1µm, the anticorrosion performance may not be displayed fully. On the other hand, when the thickness exceeds 20µm, the adhesion of the inorganic film to the film of topcoat may deteriorate.

In the case where the film of coating of this invention is used as a layer of primer, an overcoating paint is further applied to the layer of primer to form a film of topcoat. The overcoating paints to be used here are not specifically limited and examples include acrylic paints, polyester paints, urethane paints, acrylic urethane paints, acrylic polyester paints, epoxy paints, fluoropolymer-based paints, silicone paints, acrylic silicone paints, urethane silicone paints, acrylic urethane silicone paints, alkali silicate-based paints, silica sol-based paints using colloidal silica, titanium oxide-based paints, ceramic paints, and silicon-containing paints. These paints may be organic paints, inorganic paints, or organic-inorganic hybrid paints. They may be applied in a single layer or in multiple layers consisting of two or more layers and their thickness is normally controlled in the range of 1-100µm although no specific restriction is imposed on the thickness.

The coated steel material of this invention is produced by applying a solution for film-forming treatment containing silicon oxide and an organic binder to the surface of the steel material, performing the film-forming treatment to form an inorganic film which contains silicon in an amount in the range of 5-100 mg/m² and the organic binder in an amount in the range below 30 wt%, and then applying a paint to the inorganic film thus obtained to form a film of coating.

In the production of the coated steel material of this invention, the surface of the metal material may be pretreated for the purpose of degreasing and surface adjustment, preferably prior to the film-forming treatment, by a process consisting of an acid treatment with an acid solution, preferably an acid solution with a pH of 6 or less, and/or an alkaline treatment with an alkaline solution, preferably an alkaline solution with a pH of 8 or more.

The acid solutions to be used in the pretreatment may be prepared, for example, from commercially available acidic degreasing agents or from acid reagents consisting of mineral acids such as sulfuric acid, nitric acid, hydrofluoric acid, and phosphoric acid, organic acids such as acetic acid and citric acid, or mixtures of these acids. The acid solutions preferably have a pH of 6 or less. The alkaline solutions may be prepared, for example, from commercially available alkaline degreasing agents, from alkaline reagents such as caustic soda, or from mixtures of alkaline substances and they preferably have a pH of 8 or more.

The acid solution and/or the alkaline solution to be used in the pretreatment may contain a silicon compound. The pretreatment with an acid solution containing a silicon compound and/or an alkaline solution containing a silicon compound is expected to produce an effect of strengthening the adhesion between the surface of the steel material and the inorganic film to be formed thereon. Examples include acid solutions containing colloidal silica and alkaline solutions containing silicate salts such as sodium silicate and sodium metasilicate.

The procedure and the conditions of the pretreatment with the use of the aforementioned acid solution and/or alkaline solution may be the same as those hitherto adopted in the pretreatment of this kind with the use of an acid solution or an alkaline solution. For example, the pretreatment is performed by a process such as immersion and spraying at a temperature in the range of room temperature to 90°C, preferably in the range of room temperature to 70°C, for a period in the range of 1 second to 15 minutes or so, preferably in the range of 5 seconds to 10 minutes or so, more preferably in the range of 5 seconds to 3 minutes, per 1 pretreatment process.

The surface of the steel material may be etched or not etched before the pretreatment by the acid solution and/or the alkaline solution.

The surface of the steel material after the pretreatment may be washed with water if necessary. This water washing may be carried out using industrial water, underground water, tap water, ion exchanged water, or the like and the process may be selected to suit the steel material to be produced. Moreover, the pretreated steel material may be dried, if necessary, by natural air drying in which the material is left standing at room temperature or by forced drying using an air blower, a dryer, or an oven.

Then, the surface of the steel material or the surface of the steel material which has received the aforementioned pretreatment consisting of the acid treatment and/or alkaline treatment if necessary is coated with a solution for film-forming treatment containing a silicon oxide, preferably water-dispersible silica such as colloidal silica, and an organic binder and additionally, if necessary, a specified phosphorus compound and an inorganic compound to form an inorganic film containing silicon in an amount in the range of 5-100 mg/m². The solution for film-forming treatment is preferably an aqueous solution or an alcoholic solution and a surface adjuster, a solvent, or the like may be added to the solution if necessary.

In the film-forming treatment for forming the inorganic film, the process and the conditions for application of the aforementioned solution for film-forming treatment to the surface of the steel material are presented as an example below. The solution for film-forming treatment is applied using either the precoat process such as roll coating, spray coating, immersion coating, bar coating, and electrostatic coating or the postcoat process such as spray coating, spin coating, immersion coating, and electrostatic coating at a temperature normally in the range of room temperature to 80°C, preferably in the range of room temperature to 50°C, for a period in the range of 1 second to 10 minutes or so, preferably in the range of 2 seconds to 5 minutes or so, per one film-forming treatment process. If necessary, drying after the application of the solution is performed by natural air drying in which the material is left standing at room temperature or by forced drying using an air blower, a dryer, or an oven; in the case where forced drying is adopted, drying is carried out at a temperature in the range of room temperature to 250°C for a period in the range of 1 second to 10 minutes or so, preferably in the range of 2 seconds to 5 minutes or so.

After the inorganic film is formed on the surface of the steel material as specified in the aforementioned manner, a paint is applied to the inorganic film to form a film of coating. The process for this coating is either the precoat process such as roll coating, spray coating, immersion coating, bar coating, and electrostatic coating or the postcoat process such as spray coating, spin coating, immersion coating, and electrostatic coating. After the coating process, drying is carried out by a process adopted to suit the paint used; for example, drying is carried out using an air blower, a dryer, or an oven at a temperature in the range of room temperature to 300°C for a period in the range of 5 seconds to 24 hours.

In the case where the aforementioned film of coating is used as a layer of primer and a film of topcoat is formed on the layer of primer, the situation is the same as in the conventional process of applying an overcoating paint to a layer of primer to form a film of topcoat; for example, an overcoating paint is applied to the film of primer by the precoat process such as roll coating, spray coating, immersion coating, bar coating, and electrostatic coating or by the postcoat process such as spray coating, spin coating, immersion coating, and electrostatic coating and dried by a process that suits the overcoating paint.

### Effects of the Invention

According to this invention, it is possible to provide a coated steel material which has a film of coating on the surface, is substantially free of chromium or non-chromium and eco-friendly, and shows excellent corrosion resistance and workability by bending.

### Preferred Embodiments of the Invention

A preferred mode of reducing this invention into practice will be explained concretely below with reference to the examples and comparative examples.

### [Examples 1-12 and Comparative Examples 1-6]

The following panels of steel materials were prepared and respectively subjected to the pretreatment, formation of film, and formation of film of coating: a panel of zinc electroplated steel (deposition amount, 20 g/m²) measuring 70×150×0.6 mm in Examples 1-3 and Comparative Example 1; a panel of zinc hot-dip plated steel (deposition amount, 100 g/m²) measuring 70×150×0.6 mm in Examples 4-6 and Comparative Examples 2, 3, and 6; a panel of zinc-5% aluminum alloy plated steel (deposition amount, 50 g/m²) measuring 70×150×0.6 mm in Examples 7-9 and Comparative Example 4; and a panel of zinc-55% aluminum alloy plated steel (deposition amount, 150 g/m²) measuring 70×150×0.6 mm in Examples 10-12 and Comparative Example 5.

### [Pretreatment]

In Examples 1-6 and Comparative Examples 1-3, the panels of steel materials were respectively sprayed with a 2 wt% aqueous solution of a degreasing agent containing sodium metasilicate (degreasing agent A: a commercial material with the trademark of Surf Cleaner 53S available from Nippon Paint Co., Ltd.) as an alkaline solution containing a silicon compound at 60°C for 2 minutes, washed with water, and dried.

In Examples 7-12 and Comparative Examples 4-6, the panels of steel materials were respectively immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

### [Film-forming treatment]

The solutions for film-forming treatment respectively containing water-dispersible silica shown in Table 1 with the compositions shown in Tables 2, 3, and 4 were used as a treating solution containing silicon oxide the solutions in Table 2 were used in Examples 1-6, the solutions in Table 3 were used in Examples 9-12, and the solutions in Table 4 were used in Comparative Examples 1-5.

**[Table 1]**

| Water-dispersible silica | | Properties | | |
|---|---|---|---|---|
| Trademark | Manufacturer | Solid content (wt%) | Average particle diameter (nm) | Dispersion medium |
| ST-C | Nissan Chemical Industries, Ltd. | 20 | 10∼20 | Water |
| ST-O | | 20 | 10∼21 | Water |
| ST-S | | 30 | 7∼9 | Water |
| ST-UP | | 20 | 40∼300 Chain-like | Water |
| ST-OL | | 20 | 40∼50 | Water |
| ST-XS | | | 4∼6 | Water |
| ST-XL | | 40 | 40∼60 | Water |
| ST-40 | | 40 | 10∼20 | Water |
| IPA-ST | | 30 | 10∼20 | iso-C₃H₇OH |
| Aerosil 300CF | Nippon Aerosil Co., Ltd. | 100 | 7 | None |

**[Table 2]**

| Inorganic film-forming substance | | Example | | | | | |
|---|---|---|---|---|---|---|---|
| | | 1 | 2 | 3 | 4 | 5 | 6 |
| Silicon oxide | ST-C | 17 | | | | | |
| | ST-O | | | 8 | 10 | 6 | |
| | ST-S | | | | | | |
| | ST-UP | | | | | | |
| | ST-OL | | 12 | | | | 5 |
| | ST-XS | | | | | | |
| | ST-XL | | | | | | |
| | ST-40 | | | | | | |
| | IPA-ST | | | | | | |
| | Aerosil 300CF | | | | | | |
| Phosphorus compound | Phosphoric acid | | 0.30 | 0.50 | 0.30 | 0.10 | |
| | Al phosphate | | | | | | |
| Inorganic compound | Alumina | | | 0.3 | | | 5.0 |
| | Zirconia | | | | 0.7 | | |
| | Boehmite | | | | | 1.0 | |
| Organic binder | Polyacrylic acid | | 0.1 | 0.5 | 2 | 1 | 0.1 |
| | Pentalit | | 0.003 | 0.013 | 0.050 | 0.025 | 0.003 |
| | Polyvinyl alcohol | 1.00 | | | | | |
| | Cymel 303 | 0.10 | | | | | |
| Solvent | iso-C₃H₇OH | | | 10 | | | |
| | Remainder (water) | 81.9 | 87.597 | 80.687 | 86.95 | 91.875 | 89.897 |

| | | | | | | | |
|---|---|---|---|---|---|---|---|
| Note: Al phosphate : Aluminum phosphate, Alumina : Aluminasol-100, Boehmite : AS-100 | | | | | | | |

**[Table 3]**

| Inorganic film-forming substance | | Example | | | | | |
|---|---|---|---|---|---|---|---|
| | | 7 | 8 | 9 | 10 | 11 | 12 |
| Silicon oxide | ST-C | | | | | | |
| | ST-O | | 15 | 15 | | | |
| | ST-S | | | | 10 | | |
| | ST-UP | | | | | | |
| | ST-OL | | | | | 5 | 5.3 |
| | ST-XS | | | | | | |
| | ST-XL | | | | | | |
| | ST-40 | | | | | | |
| | IPA-ST Aerosil 300CF | 11 | | | | | |
| Phosphorus compound | Phosphoric acid | 0.60 | | 0.45 | | 0.02 | 0.02 |
| | Al phosphate | | 0.5 | 0.5 | | | |
| Inorganic compound | Alumina | 0.1 | | | | | |
| | Zirconia | | | | | | |
| | Boehmite | | | | | | |
| Organic binder | Polyacrylic acid | 0.1 | 0.5 | 0.5 | | 1.2 | 1.6 |
| | Pentalit | 0.003 | 0.013 | 0.013 | | 0.030 | 0.040 |
| | Polyvinyl alcohol | | | | 1.0 | | |
| | Cymel 303 | | | | 0.10 | | |
| Solvent | iso-C₃H₇OH | 10 | | | | | 10 |
| | Remainder (water) | 78.197 | 83.987 | 83.537 | 88.9 | 93.75 | 83.04 |

| | | | | | | | |
|---|---|---|---|---|---|---|---|
| Note: Al phosphate : Aluminum phosphate, Alumina : Aluminasol-100, Boehmite : AS-100 | | | | | | | |

**[Table 4]**

| Inorganic film-forming substance | | Comparative Example | | | | |
|---|---|---|---|---|---|---|
| | | 1 | 2 | 3 | 4 | 5 |
| Silicon oxide | ST-C | | | | | |
| | ST-O | 0.6 | 20 | 10 | | 5 |
| | ST-S | | | | | |
| | ST-UP | | | | | |
| | ST-OL | | | | 0.8 | |
| | ST-XS | | | | | |
| | ST-XL | | | | | |
| | ST-40 | | | | | |
| | IPA-ST | | | | | |
| | Aerosil 300CF | | | | | |
| Phosphorus compound | Phosphoric acid | | | 2.00 | | 0.50 |
| | Al phosphate | | | | | |
| Inorganic compound | Alumina | | | | 25 | 2.0 |
| | Zirconia | | | | | 10.0 |
| | Boehmite | | | | | |
| Organic binder | Polyacrylic acid | 4 | 8 | 6 | | |
| | Pentalit | 0.100 | 0.020 | 0.15 | | |
| | Polyvinyl alcohol | | | | | |
| | Camel 303 | | | | | |
| Solvent | iso-C₃H₇OH | | | | | |
| | Remainder (water) | 95.3 | 71.98 | 81.85 | 74.2 | 82.5 |

| | | | | | | |
|---|---|---|---|---|---|---|
| Note: Al phosphate : Aluminum phosphate, Alumina : Aluminasol-100, Boehmite : AS-100 | | | | | | |

In Examples 1-12 and Comparative Examples 1-5, the pretreated panels of steel materials were respectively coated with the solutions for film-forming treatment whose compositions are shown in Tables 2-4 to a coating weight of 6 g/m² using a bar coater and dried at a peak metal temperature (PMT) of 200°C for 1 minute.

During this film-forming treatment in Examples 2-5, 7-9, 11, and 12 and Comparative Examples 3 and 5, phosphoric acid (guaranteed reagent manufactured by Wako Pure Chemical Industries, Ltd.; content of phosphoric acid, 85 wt%) and/or aluminum phosphate (reagent for chemical use manufactured by Wako Pure Chemical Industries, Ltd.) were added to the treating solutions in addition to water-dispersible silica.

In Examples 2-9, 11, and 12 and Comparative Examples 1-3, polyacrylic acid (Acumer 1510 manufactured by Rohm and Haas Company; content of solids, 25 wt%) as an organic binder and polyhydric alcohol pentaerythritol (Pentalit manufactured by Koei Chemical Co., Ltd.) as a crosslinking agent were added.

In Examples 1 and 10, polyvinyl alcohol (VC-10 manufactured by Japan VAM & Poval Co., Ltd.) as a binder and amino resin (Cymel 303 manufactured by Nihon Cytec Industries Inc.) as a crosslinking agent were added.

In Examples 3-7 and Comparative Examples 4 and 5, alumina sol (Aluminasol-100 manufactured by Nissan Chemical Industries, Ltd.; content of solids, 10 wt%), zirconia sol (NanoUse ZR-30AL manufactured by Nissan Chemical Industries, Ltd.; content of solids, 30 wt%), or boehmite (AS-100 manufactured by Nissan Chemical Industries, Ltd.; content of solids, 10 wt%) was added as an inorganic compound.

In Comparative Example 6, the film-forming treatment for forming the inorganic film was not performed.

The amounts of silicon (Si: mg/m²) and phosphorus (P: mg/m²) in the inorganic films formed in the aforementioned manner in Examples 1-12 and Comparative Examples 1-5 were respectively determined by X-ray fluorescence analysis as follows. An inorganic film was formed on a panel of 99.999%-pure aluminum according to the method described in Examples 1-12 and Comparative Examples 1-5 and the amounts of silicon (Si: mg/m²) and phosphorus (P: mg/m²) contained in a unit area of the film were quantitatively determined. Similarly, an inorganic film was formed on a panel of 99.999%-pure aluminum and the amount of chromium (Cr) was quantitatively determined by X-ray fluorescence analysis; as a result, it was confirmed that chromium is not detected by this method of analysis, that is, chromium is present below the detection limit of chromium which is 0.5 mg/m².

Moreover, the contents of silicon (Si: wt%) and phosphorus (P: wt%) in the film were determined by sampling a given amount of the paint used for forming the inorganic film, heating the sample at 200°C for 5 minutes, weighing the inorganic film thereby formed, quantitatively determining the amounts of Si and P by chemical analysis, and calculating the content therefrom in percentage by weight.

### [Formation of film of coating]

The films of coating were formed on the inorganic films using the paints shown in Table 5. The silicone-containing films were formed using silicone-containing paints F, G, H, and I shown in Table 5.

**[Table 5]**

| | Name of paint (trademark) | Type of resin | Color | Manufacturer |
|---|---|---|---|---|
| A | V Nitto 150 | Polyester | White | Dai Nippon Toryo Co., Ltd. |
| B | V Nitto 120 | Epoxy resin | Clear | |
| C | DIF J-15 | Polyester | Clear | Nippon Fine Coatings, Inc. |
| D | DIF H-10 | Polyester | Clear | |
| E | DIF P-66 | Epoxy resin | White | |
| F | Aquabrid ASi90 | Acrylic silicone emulsion | Clear | Daicel Chemical Industries, Ltd. |
| G | Aquabrid 4790 | Acrylic silicone emulsion | Clear | |
| H | Bell Clean #1000 | Acrylic urethane silicone | Clear | NOF Corporation |
| I | Alco SP No100 | Acrylic silicone | Clear | Natoco Co., Lid. |
| J | V Nitto 500 | Polyester | White | Dai Nippon Toryo Co., Ltd. |
| K | V Nitto 500 | Polyester | Clear | |
| L | NKC 2000 | Acrylic polyester | Clear | Nippon Fine Coatings, Inc. |
| M | NKC 45A | Polyester | White | |

### [Examples 1-7 and 12 and Comparative Examples 1-6]

The panels of steel materials after the aforementioned pretreatment and film-forming treatment were coated by the paints to form films of coating in the manner to be described below and they were used as the specimens (coated steel materials) in Examples 1-7 and 12 and Comparative Examples 1-6.

In Example 1, the specimen (coated steel material) was prepared as follows. Paint A was applied by a bar coater, baked at a peak metal temperature (PMT) of 210°C for 40 seconds, and dried to form a 5µm-thick film of primer; then, paint J was applied by a bar coater to the film of primer, baked at a PMT of 225°C for 60 seconds, and dried to form a 20µm-thick film of topcoat.

In Example 2, the specimen (coated steel material) was prepared as follows. Paint B was applied by a bar coater, baked at a PMT of 225°C for 60 seconds, and dried to form a 10µm-thick film of topcoat.

In Example 3, the specimen (coated steel material) was prepared as follows. Paint C was applied by a bar coater, baked at a PMT of 210°C for 40 seconds, and dried to form a 10µm-thick film of primer; then, paint K was applied by a bar coater to the film of primer, baked at a PMT of 225°C for 60 seconds, and dried to form a 10µm-thick film of topcoat.

In Example 4, the specimen (coated steel material) was prepared as follows. Paint D was applied by a bar coater, baked at a PMT of 210°C for 40 seconds, and dried to form a 2µm-thick film of primer; then, paint C was applied by a bar coater to the film of primer, baked at a PMT of 225°C for 60 seconds, and dried to form a 10µm-thick film of topcoat.

In Example 5, the specimen (coated steel material) was prepared as follows. Paint E was applied by a bar coater, baked at a PMT of 210°C for 40 seconds, and dried to form a 1µm-thick film of primer; then, paint M was applied by a bar coater to the film of primer, baked at a PMT of 225°C for 60 seconds, and dried to form a 15µm-thick film of topcoat.

In Example 6, the specimen (coated steel material) was prepared as follows. Paint F was applied by a bar coater, baked at a PMT of 230°C for 40 seconds, and dried to form a 0.5µm-thick silicone-containing film of primer; then, paint K was applied by a bar coater to the film of primer, baked at a PMT of 225°C for 60 seconds, and dried to form a 30µm-thick film of topcoat.

In Example 7, the specimen (coated steel material) was prepared as follows. Paint G was applied by a bar coater, baked at a PMT of 230°C for 100 seconds, and dried to form a 20µm-thick silicone-containing film of topcoat.

In Example 12, the specimen (coated steel material) was prepared as follows. Paint F was applied by a bar coater, baked at a PMT of 230°C for 40 seconds, and dried to form a 5µm-thick silicone-containing film of primer; then, paint K was applied by a bar coater to the film of primer, baked at a PMT of 225°C for 60 seconds, and dried to form a 10µm-thick film of topcoat.

In Comparative Examples 1 and 3-6, the specimens (coated steel material) were respectively prepared as follows. Paint C was applied by a bar coater, baked at a PMT of 220°C for 40 seconds, and dried to form a 10µm-thick film of primer; then, paint K was applied by a bar coater to the film of primer, baked at a PMT of 225°C for 60 seconds, and dried to form a 10µm-thick film of topcoat.

In Comparative Example 2, the specimen (coated steel material) was prepared as follows. Paint D was applied by a bar coater, baked at a PMT of 220°C for 40 seconds, and dried to form a 5µm-thick film of primer; then, paint K was applied by a bar coater to the film of primer, baked at a PMT of 225°C for 60 seconds, and dried to form a 10µm-thick film of topcoat.

### [Examples 8-11]

In Example 8, the specimen (coated steel material) was prepared as follows. Paint H was applied by a sprayer, baked at a PMT of 170°C for 20 minutes, and dried to form a 30µm-thick silicone-containing film of topcoat.

In Example 9, the specimen (coated steel material) was prepared as follows. Paint I was applied by a sprayer, baked at a PMT of 100°C for 20 minutes, and dried to form a 5µm-thick silicone-containing film of primer; then, paint K was applied by a bar coater to the film of primer, baked at a PMT of 225°C for 60 seconds, and dried to form a 10µm-thick film of topcoat.

In Example 10, the specimen (coated steel material) was prepared as follows. Paint I was applied by a sprayer, baked at a PMT of 100°C for 20 minutes, and dried to form a 50µm-thick silicone-containing film of topcoat.

In Example 11, the specimen (coated steel material) was prepared as follows. paint I was applied by a sprayer, baked at a PMT of 100°C for 20 minutes, and dried to form a 10µm-thick silicone-containing film of topcoat.

### [Test for anticorrosion performance of coated material]

The specimens prepared in the aforementioned manner in Examples 1-12 and Comparative Examples 1-6 were respectively subjected to the salt spray test and the boiling water immersion test to evaluate the anticorrosion performance and to the flex test to evaluate the workability by bending as will be described below.

The salt spray test was conducted according to JIS K5600 by making X-scribe lines on the specimen and running the test for 1,000 hours. After 1,000 hours, the film of coating was examined and the results were evaluated as follows: ⊚, no corrosion, no blistering, and good adhesion at the scribe; ○, corrosion of less than 1 mm, no blistering, and good adhesion at the scribe; ×, corrosion of more than 1 mm or anomalies such as blistering and poor adhesion at the scribe.

The boiling water immersion test was conducted by immersing the specimen in boiling water for 5 hours and, upon completion of the test, the specimen was first observed for any anomaly such as blistering and peeling and then tested for the adhesive propertied of the film of coating. The results of observation were evaluated as follows: ○, no anomaly in appearance; ×, anomaly such as blistering and peeling.
The adhesive properties of the film of coating were evaluated according to the adhesion test by the cross-cut method in JIS K5600 and the results were evaluated as follows: ⊚, no peeling; ○, peeling in less than 5% of the cross-cut area (class 1 or 0); ×, peeling in more than 5% of the cross-cut area.

The flex test was conducted according to JIS H4001 and the results were evaluated as follows: ⊚, no cracking and no peeling in the film of coating; ○, slight cracking but no peeling; Δ, slight peeling; ×, extensive peeling.

The results of the aforementioned salt spray test, boiling water immersion test, and flex test are shown in Table 6 (Examples 1-12) and Table 7 (Comparative Examples 1-6).

**[Table 6]**

| | | | Example | | | | | |
|---|---|---|---|---|---|---|---|---|
| | | | 1 | 2 | 3 | 4 | 5 | 6 |
| Film of primer | | | A | | C | D | E | F |
| Film of topcoat | | | J | B | K | C | M | K |
| Amount of Si | | | 95.2 | 67.2 | 44.8 | 56 | 33.6 | 28 |
| Amount of P | | | 0.0 | 4.8 | 8.1 | 4.8 | 1.6 | 0.0 |
| Amount of Cr | | | Not detected | | | | | |
| Content of organic binder in inorganic film (wt%) | | | 24.4 | 1.0 | 6.3 | 18.2 | 16.6 | 1.8 |
| Content of Si in inorganic film (wt%) | | | 35.3 | 41.8 | 34.1 | 31.0 | 33.7 | 30.6 |
| Content of P in inorganic film (wt%) | | | 0.0 | 3.0 | 6.1 | 2.7 | 1.6 | 0.0 |
| Corrosion resistance | Salt spray test | | ○ | ⊚ | ⊚ | ⊚ | ⊚ | ○ |
| | Boiling water Immersion test | Appearance | ○ | ○ | ○ | ○ | ○ | ○ |
| | | Adhesive properties | ○ | ⊚ | ⊚ | ⊚ | ⊚ | ⊚ |
| Flex test | | | ⊚ | ○ | ⊚ | ⊚ | ⊚ | ○ |
| | | | Example | | | | | |
| | | | 7 | 8 | 9 | 10 | 11 | 12 |
| Film of primer | | | | | I | | | F |
| Film of topcoat | | | G | H | K | I | I | K |
| Amount of Si | | | 92.4 | 84 | 84 | 84 | 28 | 29.68 |
| Amount of P | | | 9.7 | 7.6 | 14.9 | 0.0 | 0.3 | 0.3 |
| Amount of Cr | | | Not detected | | | | | |
| Content of organic binder in inorganic film (wt%) | | | 0.7 | 3.8 | 3.4 | 26.8 | 24.5 | 29.0 |
| Content of Si in inorganic film (wt%) | | | 40.0 | 38.5 | 34.8 | 34.1 | 34.6 | 32.6 |
| Content of P in inorganic film (wt%) | | | 4.2 | 3.5 | 6.2 | 0.0 | 0.4 | 0.4 |
| Corrosion resistance | Salt spray test | | ⊚ | ⊚ | ⊚ | ○ | ○ | ○ |
| | Boiling water Immersion test | Appearance | ○ | ○ | ○ | ○ | ○ | ○ |
| | | Adhesive properties | ○ | ⊚ | ⊚ | ⊚ | ⊚ | ⊚ |
| Flex test | | | ○ | ○ | ○ | ⊚ | ⊚ | ⊚ |

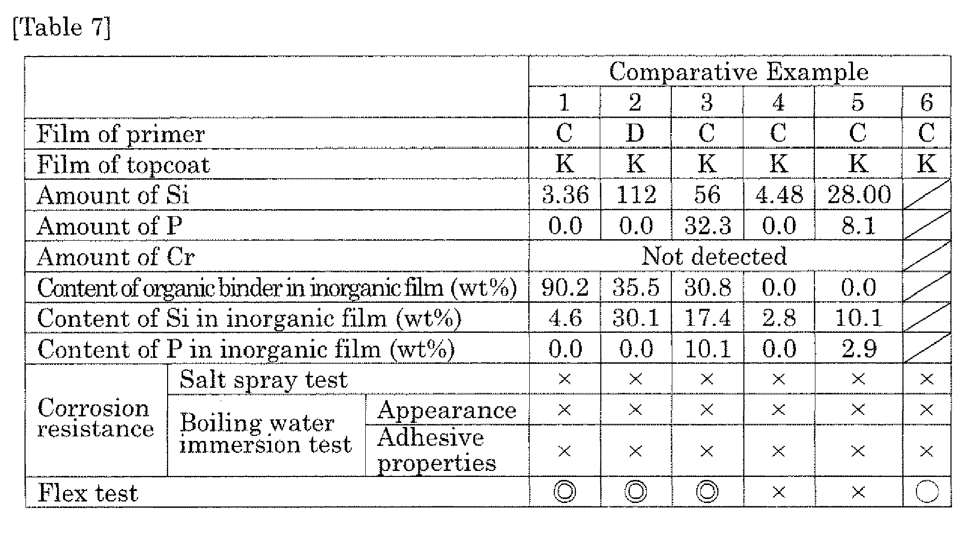

### Industrial Applicability

A coated steel material to be provided by this invention is substantially free of hexavalent and trivalent chromium or it is what is called non-chromium and yet it shows excellent corrosion resistance and, at the same time, excellent workability by bending. Being an eco-friendly material, it can be used without anxiety in a wide variety of applications and it is of high industrial value.

## Claims

1. A coated steel material of excellent workability by bending wherein a film of coating on the surface of a steel material is formed on an inorganic film which contains a silicon compound in an amount in the range of 5-100 mg/m² as silicon and an organic binder in an amount in the range below 30 wt% and is substantially free of chromium.

2. A coated steel material of excellent workability by bending as described in claim 1 wherein the content of silicon in the inorganic film is in the range of 30-45 wt%.

3. A coated steel material of excellent workability by bending as described in claim 1 or 2 wherein the inorganic film is formed from a raw material mainly composed of water-dispersible silica.

4. A coated steel material of excellent workability by bending as described in claim 3 wherein the water-dispersible silica is colloidal silica.

5. A coated steel material of excellent workability by bending as described in any one of claims 1 to 4 wherein the inorganic film contains a phosphorus compound in addition to the silicon compound.

6. A coated steel material of excellent workability by bending as described in claim 5 wherein the amount of phosphorus in the inorganic film is in the range of 1-15 mg/m².

7. A coated steel material of excellent workability by bending as described in claim 5 or 6 wherein the content of phosphorus in the inorganic film is 10 wt% or less.
